# FASCICULE DE BREVET EUROPEEN

(11) **EP 3 068 742 B1**
(45) Date de publication et mention de la délivrance du brevet: **08.01.2020**
(21) Numéro de dépôt: 14821709.4
(22) Date de dépôt: 14.11.2014
(51) Int. Cl.: E06B 9/24, C03C 17/36

(54) **VITRAGE COMPRENANT UN SUBSTRAT REVETU D'UN EMPILEMENT COMPRENANT AU MOINS UNE COUCHE FONCTIONNELLE A BASE D'ARGENT DOPE PAR DU ZINC**
VERGLASUNG MIT EINEM SUBSTRAT MIT EINER LAMINATBESCHICHTUNG MIT MINDESTENS EINER FUNKTIONELLEN SCHICHT AUS ZINKDOTIERTEM SILBER
GLAZING COMPRISING A SUBSTRATE COATED WITH A STACK COMPRISING AT LEAST ONE FUNCTIONAL LAYER MADE FROM ZINC-DOPED SILVER

(30) Priorité: 15.11.2013 FR 1361201
(43) Date de publication de la demande: 21.09.2016
(73) Titulaire: Saint-Gobain Glass France, 92400 Courbevoie (FR)
(72) Inventeur: BROSSARD, Sophie, 55419 Minneapolis MN 55419 (US)
(74) Mandataire: Saint-Gobain Recherche
(86) Numéro de dépôt international: PCT/FR2014/052921
(87) Numéro de publication internationale: WO 2015/071612

(56) Documents cités:
- WO-A1-2009/001143
- WO-A1-2010/037968
- WO-A2-2004/006228
- DE-A1-102009 051 796
- US-A1- 2005 185 267

## Description

L'invention concerne un vitrage comprenant un substrat transparent revêtu d'un empilement de couches minces comprenant au moins une couche métallique fonctionnelle à base d'argent.

Les couches métalliques fonctionnelles à base d'argent (ou couches d'argent) ont des propriétés de conduction électrique et de réflexion des rayonnements infrarouges (IR) avantageuses, d'où leur utilisation dans des vitrages dits « de contrôle solaire » visant à diminuer la quantité d'énergie solaire entrante et/ou dans des vitrages dits « bas émissifs » visant à diminuer la quantité d'énergie dissipée vers l'extérieur d'un bâtiment ou d'un véhicule.

Ces couches d'argent sont déposées entre des revêtements antireflets qui comprennent généralement plusieurs couches diélectriques permettant d'ajuster les propriétés optiques de l'empilement. Ces couches diélectriques permettent en outre de protéger la couche d'argent des agressions chimiques ou mécaniques.

La demande de brevet US 2005/185267 A1 décrit un vitrage composé d'un substrat transparent revêtu d'un empilement de couches minces comprenant au moins une couche métallique fonctionnelle à base d'argent et au moins deux revêtements antireflets, chaque revêtement antireflet comportant au moins une couche diélectrique, de manière à ce que chaque couche métallique fonctionnelle soit disposée entre deux revêtements antireflets. La couche métallique fonctionnelle de cet empilement comprend 99% en masse d'argent (Ag) et 0,5% en masse d'or (Au) et 0,5% en masse d'étain (Sn).

La demande de brevet DE 10 2009 051796 A1 décrit un vitrage comprenant une couche fonctionnelle composée d'un alliage d'argent avec au moins un des éléments suivants: Scandium (Sc), titane (Ti), vanadium (V), chrome (Cr), manganèse (Mn), fer (Fe), cobalt (Co), nickel (Ni), et zinc (Zn). Cette couche fonctionnelle est caractérisée en ce qu'elle comprend au moins 99,90 % en mol d'agent et au plus 0,10 % en mol des dits éléments. En prenant par exemple le zinc (Zn), la composition de ladite couche fonctionnelle comprend donc 99,94% en masse d'argent et 0,06% en masse de zinc.

Les propriétés optiques et électriques des vitrages dépendent directement de la qualité des couches d'argent telle que leur état cristallin, leur homogénéité ainsi que de leur environnement tel que la nature et la rugosité de surface des interfaces au-dessus et en-dessous de la couche d'argent.

Pour améliorer la qualité des couches métalliques fonctionnelles à base d'argent, il est connu d'utiliser des revêtements antireflets comprenant des couches diélectriques à fonction stabilisante destinées à favoriser le mouillage et la nucléation de la couche d'argent.

Dans ce même objectif, il est également connu d'utiliser des couches de blocage situées entre une couche fonctionnelle et un revêtement antireflet dont la fonction est de protéger ces couches fonctionnelles d'une éventuelle dégradation lors du dépôt du revêtement antireflet supérieur et/ou lors d'un traitement thermique. De nombreuses possibilités variant notamment par la nature, le nombre et la position desdites couches de blocage ont été proposées.

L'invention concerne tout particulièrement un vitrage devant subir un traitement thermique à température élevée tel qu'un recuit, un bombage et/ou une trempe. Les propriétés mécaniques des vitrages subissant des traitements thermiques sont souvent insuffisantes. En effet, lorsque des rayures sont créées sur un vitrage avant traitement thermique, leur visibilité augmente de manière considérable lorsque le vitrage est soumis à un traitement thermique de type trempe. Ce phénomène semble en partie lié à la présence de défauts dans la couche fonctionnelle.

En effet, les traitements thermiques à haute température peuvent provoquer des modifications au sein de la couche d'argent et notamment générer des défauts. Certains de ces défauts se présentent sous forme de trou ou de dôme.

Les défauts de type « trou » correspondent à l'apparition de zones dépourvues d'argent présentant une forme circulaire ou dendritique, c'est-à-dire à un démouillage partiel de la couche d'argent. La couche d'argent, après traitement thermique, est une couche d'argent comprenant des trous de forme circulaire ou dendritique correspondant aux zones sans argent. La couche d'argent observée au microscope apparait plane. L'épaisseur de cette couche prise au niveau des zones avec argent varie peu.

Les défauts de type « dôme » correspondent à la présence de « gros » grains d'argent générant des variations d'épaisseur au sein de la couche d'argent, c'est-à-dire des zones épaissies et des zones amincies. La variation d'épaisseur peut être ponctuelle, c'est-à-dire observée uniquement au niveau desdits « gros » grains. La couche d'argent peut alors avoir une épaisseur homogène sauf au niveau des gros cristaux. La variation d'épaisseur peut être plus étendue suite à un réarrangement de la couche d'argent autour desdits « gros » grains.

Les défauts de type « dôme » ne correspondent pas à un état intermédiaire de défaut de type « trou ».

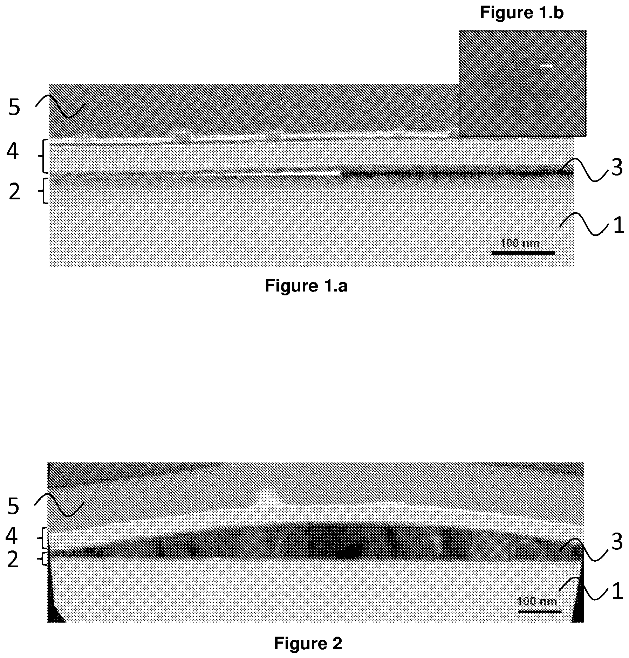

La figure 1.a est une image en coupe prise au microscope en transmission d'un défaut de type trou. La figure 1.b est une image prise au microscope électronique à balayage qui localise par le trait blanc la coupe de la figure 1.a.

La figure 2 est une image en coupe prise au microscope en transmission d'un défaut de type dôme.

Sur ces figures, on distingue le substrat en verre 1, le revêtement antireflet 2 comprenant plusieurs couches diélectriques situé en-dessous de la couche d'argent, la couche d'argent 3, le revêtement antireflet 4 situé au-dessus de la couche d'argent, une couche protectrice 5. Ces images montrent clairement la différence entre défauts de type trou et de type dôme.

La présence de défauts modifie non seulement l'aspect visuel mais aussi les propriétés optiques et la conductivité électrique de l'empilement.

La présence de ces défauts génère des points de corrosion. Ce phénomène est particulièrement important dans les empilements où se forment beaucoup de défauts de type dôme suite à un traitement thermique. Ces points de corrosion sont souvent visibles même en lumière normale.

La présence de ces défauts génère également des phénomènes de diffusion de la lumière se traduisant visuellement par l'apparition d'un halo lumineux appelé « flou », visible généralement sous lumière intense. Le flou (« haze ») correspond à la quantité de la lumière transmise qui est diffusée à des angles de plus de 2,5 °.

Les raisons et mécanismes de la formation de ces défauts sont encore mal compris. L'occurrence des défauts de type trou ou dôme semble fortement tributaire de la nature des couches diélectriques constituant les revêtements antireflets situés au-dessus et en-dessous de la couche d'argent. La présence de certains matériaux diélectriques dans l'empilement, notamment certains oxydes, augmente la formation de certains défauts (trou ou dôme).

Le demandeur a découvert que la présence d'une couche diélectrique à base de nitrure de silicium éventuellement dopé par de l'aluminium génère beaucoup moins de défauts de type trou ou de type dôme lors d'un traitement thermique à température élevée.

Le demandeur a découvert que la présence d'une couche diélectrique à base d'oxyde de titane (TiO₂), d'oxyde de niobium (Nb₂O₅) ou d'oxyde d'étain (SnO₂) dans des revêtements antireflets, favorise la formation de défaut de type trou lors d'un traitement thermique à température élevée.

Le demandeur a découvert que la présence d'une couche diélectrique à base d'oxyde d'étain et de zinc (SnZnO) dans des revêtements antireflets, favorise la formation de défaut de type dôme.

Or, ces matériaux sont des matériaux optiquement intéressants. Une solution visant à ne pas utiliser ce type de matériau dans les revêtements antireflets n'est pas satisfaisante.

Le brevet chinois CN101830644 divulgue un substrat revêtu d'un empilement comprenant une couche fonctionnelle à base d'argent allié de trois métaux, du cuivre, du zinc et du chrome.

Les solutions de l'art antérieur ne donnent pas entière satisfaction.

L'utilisation de couches de blocage prévient la présence de flou et de corrosion mais de manière limitée.

La réalisation d'une couche fonctionnelle à base d'argent allié de trois métaux est complexe et modifie les propriétés électriques de la couche fonctionnelle notamment la conductivité. Toute addition de dopant dégrade significativement la conductivité.

L'objectif de l'invention est de mettre au point un vitrage comprenant un substrat revêtu d'un empilement comprenant au moins une couche fonctionnelle à base d'argent présentant une aptitude à être rayée plus faible suite à un traitement thermique de type bombage, trempe ou recuit. Cette propriété doit être obtenue sans modifier les autres propriétés attendues pour des empilements comprenant une couche fonctionnelle métallique à base d'argent, tout particulièrement sans modifier la conductivité de manière significative.

Un autre objectif de l'invention est de fournir un vitrage comprenant un substrat revêtu d'un empilement comprenant un revêtement antireflet comprenant une couche diélectrique susceptible de générer des défauts de type dôme dans la couche fonctionnelle à base d'argent. Le vitrage doit pouvoir subir des traitements thermiques à haute température et préserver sa qualité optique notamment une faible valeur de flou, sa tenue mécanique, sa résistance à la corrosion à chaud, malgré la présence de la couche susceptible de générer des défauts de type dôme.

L'invention a pour objet un vitrage comprenant un substrat transparent revêtu d'un empilement de couches minces comprenant au moins une couche métallique fonctionnelle et au moins deux revêtements antireflets, chaque revêtement antireflet comportant au moins une couche diélectrique, de manière à ce que chaque couche métallique fonctionnelle soit disposée entre deux revêtements antireflets, caractérisé en ce que l'empilement comprend au moins une couche métallique fonctionnelle à base d'argent comprenant :
- au moins 95,0 %, de préférence au moins 96,5 % et mieux au moins 98,0 % en masse d'argent par rapport à la masse de la couche fonctionnelle et
- 0,5 à 3,5 % de préférence 1,0 à 2,0 % en masse de zinc par rapport à la masse de zinc et d'argent dans la couche fonctionnelle.

La limitation selon laquelle la couche métallique fonctionnelle à base d'argent comprend au moins 95,0 %, de préférence au moins 96,5 % et mieux au moins 98,0 % en masse d'argent par rapport à la masse de la couche fonctionnelle signifie que la masse totale d'éventuels dopants autres que le zinc ou d'impuretés ne dépasse pas 5,0 %, de préférence 3,5 % et mieux 2,0 % de la masse de la couche fonctionnelle. De préférence, la couche métallique fonctionnelle à base d'argent est dopée uniquement par du zinc. Elle comprend moins de 1,0 % en masse de métaux autres que de l'argent et du zinc par rapport à la masse de la couche métallique fonctionnelle à base d'argent.

La mesure du dopage en zinc peut être réalisée par exemple par analyse microsonde de Castaing (ElectroProbe MicroAnalyzer ou EPMA en anglais).

Le dopage de la couche d'argent par du zinc permet d'améliorer l'aptitude à la rayure avant et après traitement thermique peu importe la structure de l'empilement et les défauts susceptibles d'être générés.

Le zinc est un élément soluble dans l'argent. Après recuit, il tend à rester en solution solide dans les grains d'argent. Sa présence devrait normalement dégrader la conductivité de la couche fonctionnelle et donc de l'empilement.

Or, les propriétés recherchées sont obtenues après traitement thermique sans diminution significative de la conductivité lorsque les proportions massiques de zinc n'excèdent pas 3,5 %. Cela peut être attribué aux faibles proportions de zinc utilisées mais également à l'amélioration de la résistance carré imputable à la non dégradation de la couche d'argent.

La solution de l'invention convient tout particulièrement lorsque l'empilement comprend au moins un revêtement antireflet comprenant une couche diélectrique susceptible de générer des défauts de type dôme.

Le dopage de la couche d'argent par du zinc selon les proportions revendiquées permet de diminuer considérablement la formation de défauts de type dôme responsable du flou et de l'apparition de corrosion après traitement thermique.

Les couches diélectriques susceptibles de générer des défauts de type dôme peuvent être identifiées grâce à une analyse par microscopie optique ou par microscopie électronique à balayage. Pour cela, une couche diélectrique est déposée sur un substrat au contact ou à proximité d'une couche d'argent. On soumet l'ensemble à un traitement thermique. L'observation des images permettent d'identifier si des défauts sont générés. Le cas échéant, si ces défauts sont de type trou ou de type dôme.

De préférence, le revêtement antireflet comprenant une couche diélectrique susceptible de générer des défauts de type dôme est situé en-dessous d'une couche métallique fonctionnelle à base d'argent.

Les couches diélectriques susceptibles de générer des défauts de type dôme sont choisies parmi les couches à base d'oxyde d'étain et de zinc de formule générale SnₓZn_{y}O_{z}, dans lequel le rapport massique Sn/Zn est compris entre 50/50 et 85/15, de préférence entre 55/45 et 75/25 ou encore, selon un autre mode avantageux, entre 50/50 et 64/36. La couche de formule générale SnₓZn_{y}O_{z} est de préférence obtenue dans l'empilement antireflet par pulvérisation cathodique réactive d'une cible constituée par un alliage d'étain et de zinc, en atmosphère oxydante.

Un autre mode de réalisation avantageux consiste à éviter l'utilisation de couches diélectriques susceptibles de générer des défauts de type trou à proximité de la couche d'argent et de préférence dans tout l'empilement. De préférence, l'empilement ne comprend pas de revêtement antireflet comprenant une couche diélectrique susceptible de générer des défauts de type trou choisie parmi les couches à base d'oxyde de titane (TiO₂), d'oxyde de niobium (Nb₂O₅) ou d'oxyde d'étain (SnO₂).

Avantageusement, la couche métallique fonctionnelle à base d'argent est dans ce cas séparée d'au moins 10 nm, de préférence d'au moins 20 nm, de toutes couches susceptibles de générer des défauts de type trou. La couche métallique fonctionnelle à base d'argent est séparée d'au moins 10 nm, de préférence d'au moins 20 nm, de toutes couches comprenant du titane.

Dans toute la description le substrat selon l'invention est considéré posé horizontalement. L'empilement de couches minces est déposé au-dessus du substrat. Le sens des expressions « au-dessus » et « en-dessous » et « inférieur » et « supérieur » est à considérer par rapport à cette orientation. A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une (ou plusieurs) couche(s) intercalée(s) entre ces deux couches (ou couche et revêtement).

Sauf mention contraire, les épaisseurs évoquées dans le présent document sont des épaisseurs physiques. On entend par couche mince, une couche présentant une épaisseur comprise entre 0,1 nm et 100 micromètres.

Selon un mode de réalisation avantageux, l'empilement peut comprendre :
- un revêtement antireflet situé en-dessous de la couche métallique fonctionnelle à base d'argent comprenant au moins une couche diélectrique à base d'oxyde de zinc et d'étain et une couche diélectrique à fonction stabilisante à base d'oxyde de zinc,
- une couche métallique fonctionnelle à base d'argent comprenant du zinc située immédiatement au contact de la couche diélectrique à fonction stabilisante à base d'oxyde de zinc,
- éventuellement une surcouche de blocage,
- un revêtement antireflet situé au-dessus de la couche métallique fonctionnelle à base d'argent,
- éventuellement une couche de protection supérieure.

L'épaisseur des couches fonctionnelles à base d'argent est par ordre de préférence croissant comprise de 5 à 20 nm, de 8 à 15 nm. Ces couches peuvent être obtenues par dépôt par pulvérisation cathodique soit à partir de deux cibles, soit à partir d'une cible d'argent dopé au zinc.

Selon l'invention, la couche métallique fonctionnelle à base d'argent peut être directement au contact d'une couche de blocage. Une couche de blocage disposée sous une couche fonctionnelle en direction du substrat est appelée sous-couche de blocage « UB ». Une couche de blocage disposée sur la couche fonctionnelle à l'opposé du substrat est appelée surcouche de blocage « OB ».

De préférence, l'empilement comprend au moins une couche de blocage située au-dessus et immédiatement au contact de la couche métallique fonctionnelle à base d'argent.

Lorsqu'une couche de blocage est présente au contact d'une couche fonctionnelle à base d'argent dopé par du zinc selon l'invention, on utilisera de préférence une couche ne comprenant pas de titane. En effet, le titane peut réagir avec le zinc et inhiber son action. Le diagramme de phase Ti-Zn indique la formation de plusieurs composés intermétalliques. La caractéristique selon laquelle la couche métallique fonctionnelle à base d'argent est séparée d'au moins 10 nm, de préférence d'au moins 20 nm, de toutes couches comprenant du titane exclut également la présence d'une couche de blocage à base de titane au contact de la couche métallique fonctionnelle à base d'argent.

La couche de blocage est par exemple une couche à base de NiCr, NiCrN, NiCrOx, NiO ou NbN. L'épaisseur de chaque couche de blocage, sous-couche ou surcouche, est d'au moins 0,5 nm et d'au plus 2,0 nm.

Lorsque ces couches de blocage sont déposées sous forme métallique, nitrurée, partiellement oxydée ou oxynitrurée, elles peuvent subir une oxydation partielle ou totale selon leur épaisseur, par exemple, au moment du dépôt de la couche suivante.

Les revêtements antireflets comprennent avantageusement des couches diélectriques non susceptibles de générer des défauts ou des couches diélectriques susceptibles de générer des défauts de type dôme. Les couches diélectriques des revêtements antireflets peuvent être choisies parmi les oxydes ou nitrures d'un ou plusieurs éléments choisi(s) parmi le titane, le silicium, l'aluminium, l'étain et le zinc.

Les revêtements antireflets peuvent comprendre des couches diélectriques à fonction barrière et/ou des couches diélectriques à fonction stabilisante.

On entend par couches diélectriques à fonction barrière, une couche en un matériau apte à faire barrière à la diffusion de l'oxygène et de l'eau à haute température, provenant de l'atmosphère ambiante ou du substrat transparent, vers la couche fonctionnelle. Les couches diélectriques à fonction barrière peuvent être :
- à base de composés de silicium choisis parmi les oxydes tels que SiO₂, les nitrures de silicium Si₃N₄ et les oxynitures SiOₓN_{y,} éventuellement dopé à l'aide d'au moins un autre élément, comme l'aluminium,
- à base de nitrures d'aluminium AIN ou
- à base d'oxyde mixte de zinc et d'étain.

On entend par couches diélectriques à fonction stabilisante, une couche en un matériau apte à stabiliser l'interface entre la couche fonctionnelle et cette couche. Les couches diélectriques à fonction stabilisante sont de préférence à base d'oxyde cristallisé, notamment à base d'oxyde de zinc, éventuellement dopé à l'aide d'au moins un autre élément, comme l'aluminium. La ou les couches diélectriques à fonction stabilisante sont de préférence des couches d'oxyde de zinc.

De préférence, chaque couche fonctionnelle métallique est au-dessus d'un revêtement antireflet dont la couche supérieure est une couche diélectrique à fonction stabilisante, de préférence à base d'oxyde de zinc et/ou en-dessous d'un revêtement antireflet dont la couche inférieure est une couche diélectrique à fonction stabilisante.

La dernière couche de chaque revêtement antireflet situé en-dessous d'une couche fonctionnelle est une couche diélectrique à fonction stabilisante. En effet, il est avantageux d'avoir une couche à fonction stabilisante, par exemple, à base d'oxyde de zinc en-dessous d'une couche fonctionnelle, car elle facilite l'adhésion et la cristallisation de la couche fonctionnelle à base d'argent et augmente sa qualité et sa stabilité à haute température. Il est également avantageux d'avoir une couche à fonction stabilisante, par exemple, à base d'oxyde de zinc au-dessus d'une couche fonctionnelle.

La ou les couches diélectriques à fonction stabilisante peuvent donc se trouver au-dessus et/ou en dessous d'au moins une couche fonctionnelle ou de chaque couche fonctionnelle, soit directement à son contact ou soit séparées par une couche de blocage. De préférence, chaque couche fonctionnelle métallique est au-dessus d'un revêtement antireflet dont la couche supérieure est une couche diélectrique à fonction stabilisante, de préférence à base d'oxyde de zinc et/ou en-dessous d'un revêtement antireflet dont la couche inférieure est une couche diélectrique à fonction stabilisante, de préférence à base d'oxyde de zinc.

Cette couche diélectrique à fonction stabilisante peut avoir une épaisseur d'au moins 5 nm, notamment une épaisseur comprise entre 5 et 25 nm et mieux de 8 à 15 nm.

Un mode de réalisation particulièrement avantageux concerne un vitrage comprenant un substrat revêtu d'un empilement comprenant en partant du substrat transparent :
- un revêtement antireflet comprenant au moins une couche diélectrique à fonction barrière et au moins une couche diélectrique à fonction stabilisante,
- une couche fonctionnelle,
- une couche de blocage,
- un revêtement antireflet comprenant au moins une couche diélectrique à fonction stabilisante et une couche diélectrique à fonction barrière.

L'empilement peut comprendre une couche supérieure de protection déposée comme dernière couche de l'empilement notamment pour conférer des propriétés anti-rayures. Ces couches supérieures de protection ne sont pas considérées comme comprises dans un revêtement antireflet. Ces couches supérieures de protection sont séparées des couches fonctionnelles au moins par un revêtement antireflet dont l'épaisseur est en général supérieure à 20 nm. Ces couches sont en général ultra-minces et ont notamment une épaisseur comprise entre 2 et 5 nm.

Le substrat peut être en tout matériau susceptible de résister aux températures élevées du traitement thermique. Les substrats transparents selon l'invention sont de préférence en un matériau rigide minéral, comme en verre, notamment silico-sodo-calcique. L'épaisseur du substrat varie généralement entre 0,5 mm et 19 mm. L'épaisseur du substrat est de préférence inférieure ou égale à 6 mm, voire 4 mm.

Le vitrage comprenant le substrat revêtu de l'empilement peut avoir subi un traitement thermique à température élevée. Les traitements thermiques sont choisis parmi un recuit, par exemple par un recuit flash tel qu'un recuit laser ou flammage, une trempe et/ou un bombage. La température de traitement thermique est supérieure à 300 °C, de préférence supérieure à 400 °C, et mieux supérieure à 500 °C.

Le substrat revêtu de l'empilement peut être est un verre bombé ou trempé.

Le vitrage peut être sous forme de vitrage monolithique, de vitrage feuilleté, de vitrage asymétrique ou d'un vitrage multiple notamment un double-vitrage ou un triple vitrage.

Le vitrage selon l'invention peut être un vitrage feuilleté. Dans ce cas, le substrat comprend au moins deux substrats rigides du type verre assemblés par au moins une feuille de polymère thermoplastique, afin de présenter une structure de type verre/empilement de couches minces/feuille(s)/verre. Le polymère peut notamment être à base de polyvinylbutyral PVB, éthylène vinylacétate EVA, polyéthylène téréphtalate PET, polychlorure de vinyle PVC. Dans une structure feuilletée, le substrat porteur de l'empilement peut être au contact de la feuille de polymère.

L'invention concerne également un procédé de fabrication du substrat tel que défini ci-dessus. Selon ce procédé, on dépose l'empilement de couches minces sur le substrat par une technique sous vide du type pulvérisation cathodique éventuellement assistée par champ magnétique.

### Exemples

### I. Préparation des vitrages : matériaux et conditions de dépôt

Des empilements de couches minces définis ci-après sont déposés sur des substrats en verre sodo-calcique clair d'une épaisseur de 2 ou 4 mm.

Pour ces exemples, les conditions de dépôt des couches déposées par pulvérisation (pulvérisation dite « cathodique magnétron ») sont résumées dans le tableau 1 ci-dessous.

Le dopage de la couche d'argent par du zinc est réalisé par co-pulvérisation à partir de deux cibles, une cible d'Ag et une cible de zinc. Lors du dépôt les deux cibles sont placées inclinées et allumées en même temps. Le dopage souhaité est obtenu en ajustant les puissances de dépôt. La puissance de dépôt de la cible d'argent est fixe et on fait varier la puissance de dépôt de la cible de zinc. Des couches d'argent dopé en zinc avec des proportions de zinc comprises entre 0 et 3,5 % en masse par rapport à la masse d'argent et de zinc ont été testées. Dans tous les exemples qui suivent, la composition des couches et notamment les proportions de zinc dans la couche d'argent dopé au zinc a été mesurée par les techniques classiques de microsonde de Castaing (également appelée en anglais Electron Probe Microanalyser ou EPMA). La concentration en zinc est exprimée en masse de zinc par rapport à la masse d'argent et de zinc.

| **Tableau 1** | **Cibles employées** | **Pression dépôt** | **Gaz** | **Indice*** |
|---|---|---|---|---|
| Si₃N₄ | Si:Al (9:8 % en pds) | 2.10⁻³ mbar | Ar 47% - N₂ 53 % | 2,00 |
| ZnO | Zn:Al (98:2 % en pds) | 2.10⁻³ mbar | Ar 95 % - O₂ 5 % | 2,04 |
| NiCr | Ni : Cr (80 : 20% at.) | 2.10⁻³ mbar | Ar à 100 % | - |
| Ag | Ag | 2.10⁻³ mbar | Ar à 100 % | - |
| Ag : Zn | Ag et Zn | 2.10⁻³ mbar | Ar à 100 % | - |
| TiO₂ | TiOx | 2.10⁻³ mbar | Ar 94 % - N₂ 6% | 2,32 |
| SnZnO | Sn:Zn (50:50% en pds) | 2.10⁻³ mbar | Ar 25% - N₂ 75 % | 2,09 |

| | | | | |
|---|---|---|---|---|
| at. : atomique ; pds : poids ; * : à 550 nm. | | | | |

Les tableaux ci-dessous listent les matériaux et les épaisseurs physiques en nanomètres (sauf autres indications) de chaque couche ou revêtement qui constitue les empilements en fonction de leurs positions vis-à-vis du substrat porteur de l'empilement.

| **Vitrage** | **Couches** | **Cp. 1** | **Cp. 2** | **Cp. 3** | **Emp.1** | **Emp.2** |
|---|---|---|---|---|---|---|
| Couche protectrice | TiO₂ | 2 | 2 | 2 | 2 | 2 |
| Revêtement antireflet AR2 | Si₃N₄ | 40 | 40 | 40 | 40 | 40 |
| | ZnO | 5 | 5 | 5 | 5 | 5 |
| Couche blocage OB | NiCr | 0,5 | 0,5 | 0,5 | 0,5 | 0,5 |
| Couche fonctionnelle | Ag | 10 | 10 | 10 | - | - |
| | Ag : Zn | - | - | - | 10 | 10 |
| Revêtement antireflet AR1 | ZnO | 5 | 5 | 5 | 5 | 5 |
| | TiO₂ | - | - | 10 | - | - |
| | Si₃N₄ | 25 | - | 25 | 25 | - |
| | SnZnOₓ | - | 30 | - | - | 30 |
| Substrat (mm) | verre | 4 | 4 | 4 | 4 | 4 |
| Figures | - | 4 | 5 | 6 | - | 7 à 9 |

Les vitrages Emp.1 et Emp.2 sont des vitrages comprenant l'empilement décrit avec une couche fonctionnelle présentant un dopage en zinc variable.

### II. Evolution de la résistance carré en fonction du dopage en zinc après traitement thermique

La résistance carré de substrats comprenant l'empilement 1 avec des couches fonctionnelles à base d'argent comprenant un dopage en zinc croissant a été évaluée. La résistance carré Rsq, correspondant à la résistance rapportée à la surface, est mesurée par induction avec un Nagy SMR-12. La résistance carré a été mesurée avant traitement thermique (BHT) et après une trempe thermique (AHT) dans les conditions suivantes : 10 minutes à une température de 650 °C.

Le tableau ci-dessous reprend les résultats de résistance carré obtenus pour des substrats revêtus, avant et après trempe, en fonction du dopage en zinc.

| **Exemple** | **Proportions en masse de Zn** | | | | |
|---|---|---|---|---|---|
| | **0** | **0,4** | **0,8** | **1,9** | **3,5** |
| **Rsq avant trempe** | 5,6 ± 0.2 | 5,9 ± 0.2 | 6,7 ± 0.2 | 8,6 ± 0.2 | 10 ± 0.2 |
| **Rsq après trempe** | 4,7 ± 0.2 | 4,5 ± 0.2 | 4,9 ± 0.2 | 6,6 ± 0.2 | 7,3 ± 0.2 |

Pour des proportions en zinc comprises entre 0,1 et 2,0 % massique, après traitement thermique, on atteint des niveaux de résistance carré équivalents à ceux obtenus avec des empilements non traités thermiquement comprenant une couche à base d'argent non dopé.

En conclusion, le dopage de la couche d'argent par du zinc selon les proportions revendiquées ne modifie pas de manière significative la résistivité ou la conductivité électrique de l'empilement.

### III. Effet du dopage en zinc sur la résistance mécanique

La résistance à la rayure de substrats comprenant l'empilement 1 avec des couches fonctionnelles à base d'argent comprenant un dopage en zinc croissant, tels que décrits ci-dessus, a été testée. Des tests Erichsen à la Pointe (EST) dans les conditions suivantes ont été réalisés :
- EST : avant d'avoir subi un traitement thermique,
- ESTTT : après avoir subi un traitement thermique dans les conditions suivantes : 10 minutes à une température de 620 °C,
- TTEST : après avoir subi un traitement thermique de type trempe dans les conditions suivantes : 10 minutes à une température de 620 °C.

Ce test consiste à reporter la valeur de la force nécessaire, en Newton, pour réaliser une rayure dans l'empilement lors de la réalisation du test (pointe de Van Laar, bille d'acier).

La tendance observée est une amélioration de la résistance mécanique avant traitement thermique, après traitement thermique et après trempe lorsque les proportions de zinc augmentent.

On a également observé une diminution de la profondeur des rayures pour des empilements comprenant une proportion croissante de zinc dans la couche d'argent.

Le tableau ci-dessous reprend les résultats de mesure de la largeur des rayures en µm selon la force appliquée pour générer une rayure pour des substrats revêtus avant traitement thermique (EST) et après trempe (TTEST) selon le dopage en zinc.

| **Profondeur des rayures (µm)** | **Proportion en masse de Zn** | | | | |
|---|---|---|---|---|---|
| | **0** | **0,4** | **0,8** | **1,9** | **3,5** |
| **EST 7 N** | 67 ± 10 | 100 ± 10 | 50 ± 10 | 60 ± 10 | 42 ± 10 |
| **EST 10 N** | 134 ± 10 | 138 ± 10 | 120 ± 10 | 101 ± 10 | 70 ± 10 |
| **TTEST 0,5 N** | 19 ± 10 | 19 ± 10 | 10 ± 10 | 10 ± 10 | 10 ± 10 |
| **TTEST 1 N** | 36 ± 10 | 39 ± 10 | 26 ± 10 | 15 ± 10 | 12 ± 10 |

L'amélioration apportée par le dopage en zinc sur la diminution de la largeur des rayures est significative. On constate dans tous les cas, avant ou après traitement thermique, une diminution importante avec une augmentation des proportions en zinc.

### IV. Amélioration du flou dans les empilements comprenant des couches susceptibles de générer des défauts de type dôme

Ces essais ont été réalisés avec des substrats comprenant l'empilement 2 avec des couches fonctionnelles à base d'argent comprenant un dopage en zinc croissant.

### 1. Observations microscopiques

La morphologie des couches est analysée par microscopie optique et par microscopie électronique à balayage. Ces essais mettent en évidence les différents défauts générés en fonction de la nature des couches diélectriques dans le revêtement antireflet sous la couche d'argent.

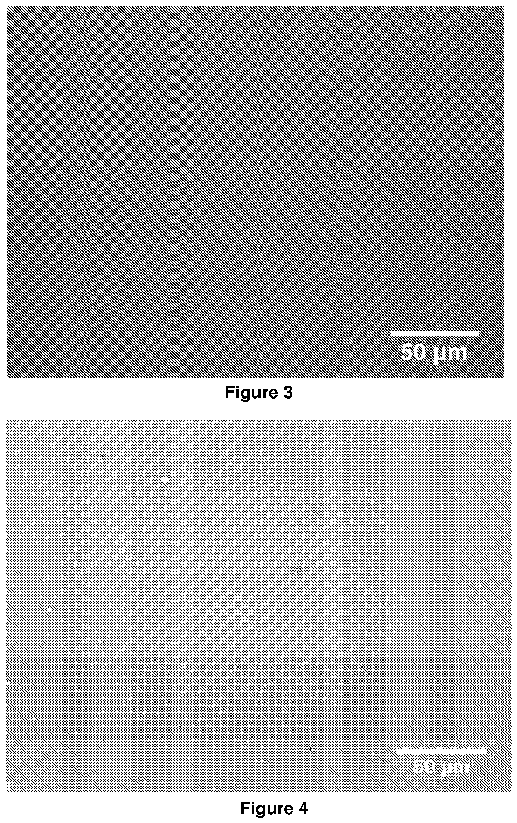

La figure 3 est une image MEB d'un substrat revêtu d'un empilement comprenant une couche d'argent n'ayant pas subi de traitement thermique. Aucun défaut n'est observable.

La figure 4 illustre le vitrage cp.1 ne comprenant pas de couches susceptibles de générer des défauts de type dôme ou de type trou selon l'invention. On constate sur cette image qu'il y a peu de défauts de type trou ou dôme après traitement thermique.

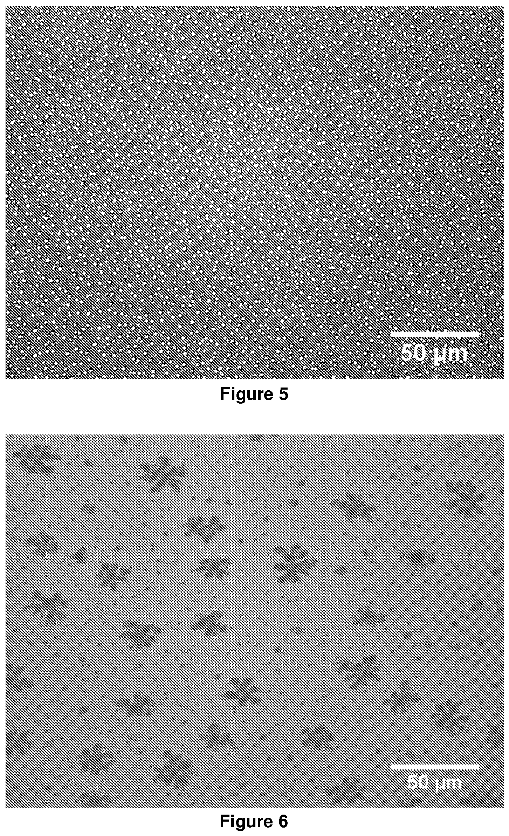

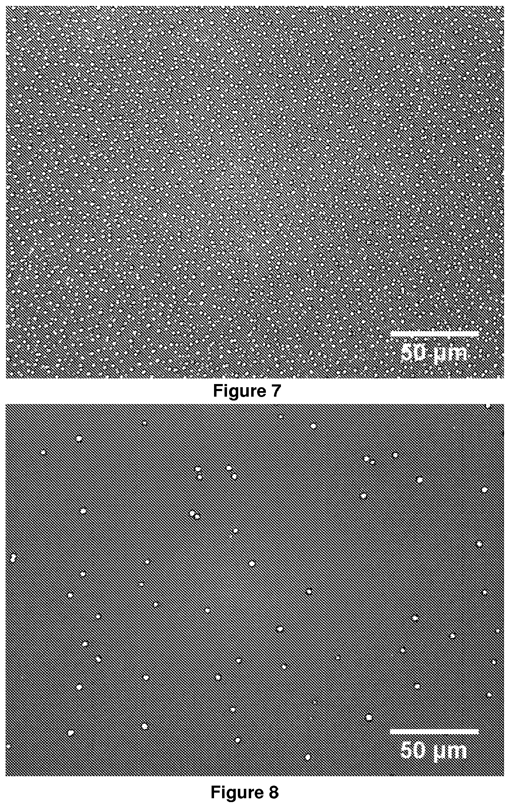

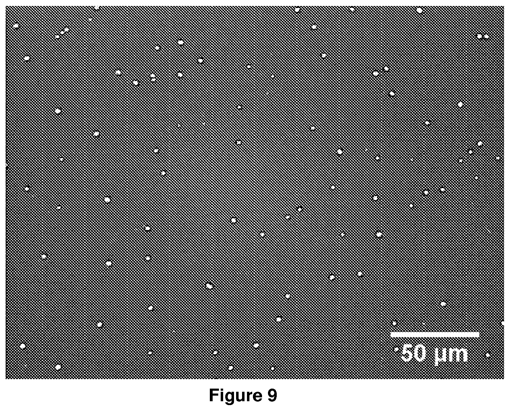

La figure 5 est une image du vitrage cp.2 comprenant un empilement avec une couche susceptible de générer des défauts de type dôme. Ce vitrage de la figure 5 diffère du vitrage de la figure 4 uniquement par la présence d'une couche d'oxyde de zinc et d'étain à la place de la couche de nitrure de silicium dans le revêtement antireflet situé en-dessous de la couche fonctionnelle à base d'argent. On n'observe pas sur cette image de tâche de forme dendritique caractéristique des défauts de type trou.

La figure 6 est une image du vitrage cp.3 comprenant un empilement avec une couche susceptible de générer des défauts de type trou. Les tâches noires de forme dendritique correspondent aux zones sans argent, c'est-à-dire aux défauts de type trou obtenus après trempe.

Ces exemples comparatifs montrent clairement que la nature des couches diélectriques du revêtement antireflet influe sur la présence et le type de défauts générés dans les couches d'argent.

La présence de défaut de type dôme après traitement thermique peut être quantifiée en mesurant la densité de défauts de type dôme sur les vitrages traités thermiquement. La mesure consiste à déterminer le nombre de dômes par µm².

Le tableau ci-dessus récapitule les images prises au microscope électronique à balayage (image MEB) des différents vitrages ainsi que la densité de défauts de type dôme. Toutes ces images ont toutes été prises sur des vitrages ayant subi un traitement thermique à 600 °C.

| | Dopage en zinc | Dômes/µm² |
|---|---|---|
| Figure 5 | 0 % | 0,099 |
| Figure 6 | 0,4 % | 0,053 |
| Figure 7 | 0,8 % | 0,002 |
| Figure 8 | 1,9 % | 0,003 |
| Figure 9 | 3,5 % | 0,003 |

Ces images permettant d'évaluer la densité de dôme montrent clairement l'effet du dopage en zinc sur la diminution du nombre de défaut de type dôme.

### 2. Evaluation du flou, de la densité de dômes et de la corrosion

Les variations de flou et de la densité de dômes après traitement thermique ont été évaluées après traitement thermique à 600 °C ou à 650 °C pendant 10 minutes au four Naber.

La variation du niveau de flou a été évaluée par mesure de la réflexion diffuse visible moyenne MRd avec un spectromètre Perkin Elmer L900, en éjectant de la sphère d'intégration la réflexion spéculaire, et exprimée en pourcentage par rapport à une réflexion totale sur un miroir de calibration.

La densité des dômes après traitement thermique a été évaluée en mesurant la proportion de surface corrodée sur les échantillons traités à 600 °C et à 650°C. La densité de dômes correspond au nombre de dômes observés par µm².

Le niveau de corrosion après traitement thermique a été évalué en mesurant la proportion de surface corrodée sur les échantillons recuits à 700 °C. La corrosion correspond à la fraction de surface corrodée.

Le tableau ci-dessous reprend les résultats obtenus pour le flou, la densité de dômes après trempe à 600 ou à 650 °C et la corrosion à 700 °C des substrats revêtus en fonction du dopage en zinc.

| **Exemple** | **Trempe** | **Concentration en Zn en masse** | | | | |
|---|---|---|---|---|---|---|
| | | **0** | **0,4** | **0,8** | **1,9** | **3,5** |
| Flou | 600 °C | 4,4% | 3,93% | 0,39% | 0,46% | 0,26% |
| | 650 °C | 8,65% | 7,81% | 1,16% | 1,04% | 1,67% |
| Dôme (nombre par µm²) | 600 °C | 0,053 | 0,053 | 0,002 | 0,003 | 0,003 |
| | 650 °C | 0,099 | 0,078 | 0,004 | 0,004 | 0,008 |
| Corrosion (en % d'aire occupée) | 700 °C | 18,1% | 5,9% | 0,2% | 0,1% | 2,8% |

Des concentrations massiques de zinc comprises entre 1,0 et 2,0 % permettent une réelle diminution de la densité des dômes, du niveau du flou ainsi que du niveau de corrosion après traitement thermique.

## Revendications

1. Vitrage comprenant un substrat transparent revêtu d'un empilement de couches minces comprenant au moins une couche métallique fonctionnelle et au moins deux revêtements antireflets, chaque revêtement antireflet comportant au moins une couche diélectrique, de manière à ce que chaque couche métallique fonctionnelle soit disposée entre deux revêtements antireflets, **caractérisé en ce que** l'empilement comprend au moins une couche métallique fonctionnelle à base d'argent comprenant :
- au moins 95,0 %, de préférence au moins 96,5 % et mieux au moins 98,0 % en masse d'argent par rapport à la masse de la couche fonctionnelle et
- 0,5 à 3,5 % de préférence 1,0 à 2,0 % en masse de zinc par rapport à la masse de zinc et d'argent dans la couche fonctionnelle.

2. Vitrage selon la revendication 1, **caractérisé en ce que** la couche métallique fonctionnelle à base d'argent comprend moins de 1,0 % en masse de métaux autres que de l'argent et du zinc par rapport à la masse de la couche métallique fonctionnelle à base d'argent.

3. Vitrage selon l'une des revendications précédentes, **caractérisé en ce que** ce que l'empilement comprend au moins un revêtement antireflet comprenant une couche diélectrique susceptible de générer des défauts de type dôme.

4. Vitrage selon la revendication 3, caractérisé en les couches diélectriques susceptibles de générer des défauts de type dômes sont choisies parmi les couches à base d'oxyde d'étain et de zinc.

5. Vitrage selon l'une des revendications précédentes, **caractérisé en ce que** l'empilement ne comprend pas de revêtement antireflet comprenant une couche diélectrique susceptible de générer des défauts de type trou choisies parmi les couches à base d'oxyde de titane, d'oxyde de niobium et d'oxyde d'étain.

6. Vitrage selon l'une des revendications précédentes, **caractérisé en ce que** la couche métallique fonctionnelle à base d'argent est séparée d'au moins 10 nm, de préférence d'au moins 20 nm, de toutes couches comprenant du titane.

7. Vitrage selon l'une des revendications précédentes, **caractérisé en ce que** ce que l'empilement comprend au moins une couche de blocage située au-dessus et immédiatement au contact de la couche métallique fonctionnelle à base d'argent.

8. Vitrage selon la revendication 7, **caractérisé en ce que** la couche de blocage est une couche à base de NiCr, NiCrN, NiCrOx, NiO ou NbN.

9. Vitrage selon l'une quelconque des revendications précédentes, caractérisé en ce le revêtement antireflet comprenant une couche diélectrique susceptible de générer des défauts de type dôme est situé en-dessous d'une couche métallique fonctionnelle à base d'argent.

10. Vitrage selon l'une quelconque des revendications précédentes, **caractérisé en ce que** le revêtement antireflet situé en-dessous de la couche métallique fonctionnelle à base d'argent comporte au moins une couche diélectrique à fonction stabilisante immédiatement en contact avec la couche de blocage, notamment à base d'oxyde de zinc, éventuellement dopé à l'aide d'au moins un autre élément, comme l'aluminium.

11. Vitrage selon l'une quelconque des revendications précédentes, **caractérisé en ce que** l'empilement comprend :
- un revêtement antireflet situé en-dessous de la couche métallique fonctionnelle à base d'argent comprenant au moins une couche diélectrique à base d'oxyde de zinc et d'étain et une couche diélectrique à fonction stabilisante à base d'oxyde de zinc,
- une couche métallique fonctionnelle à base d'argent comprenant du zinc située immédiatement au contact de la couche diélectrique à fonction stabilisante à base d'oxyde de zinc,
- éventuellement une surcouche de blocage,
- un revêtement antireflet situé au-dessus de la couche métallique fonctionnelle à base d'argent,
- éventuellement une couche de protection supérieure.

12. Vitrage selon l'une des revendications précédentes **caractérisé en ce que** l'épaisseur d'une couche métallique fonctionnelle est comprise entre 5 et 20 nm.

13. Vitrage selon l'une quelconque des revendications précédentes, **caractérisé en ce que** les revêtements antireflets comportent au moins une couche diélectrique à fonction barrière à base de composés de silicium choisis parmi les oxydes tels que SiO₂, les nitrures de silicium Si₃N₄ et les oxynitures SiOₓN_{y,} éventuellement dopé à l'aide d'au moins un autre élément, comme l'aluminium.

14. Vitrage selon l'une quelconque des revendications précédentes **caractérisé en ce que** le substrat revêtu de l'empilement a subi un traitement thermique à une température supérieure à 300 °C, de préférence 500 °C.

15. Vitrage selon l'une quelconque des revendications précédentes, **caractérisé en ce qu'**au moins le substrat revêtu de l'empilement est en verre bombé ou trempé.

## Patentansprüche

1. Verglasung, umfassend ein transparentes Substrat mit einer Laminatbeschichtung aus dünnen Schichten, umfassend mindestens eine metallische funktionelle Schicht und mindestens zwei Antireflexbeschichtungen, wobei jede Antireflexbeschichtung mindestens eine dielektrische Schicht umfasst, sodass jede metallische funktionelle Schicht zwischen zwei Antireflexbeschichtungen angeordnet ist, **dadurch gekennzeichnet, dass** das Laminat mindestens eine metallische funktionelle Schicht auf Silberbasis umfasst, umfassend:
- mindestens 95,0 %, vorzugsweise mindestens 96,5 % und besser mindestens 98,0 Masse-% Silber, bezogen auf die Masse der funktionellen Schicht und
- 0,5 bis 3,5 Masse-%, vorzugsweise 1,0 bis 2,0 Masse-% Zink, bezogen auf die Masse von Zink und Silber in der funktionellen Schicht.

2. Verglasung nach Anspruch 1, **dadurch gekennzeichnet, dass** die metallische funktionelle Schicht auf Silberbasis weniger als 1,0 Masse-% anderer Metalle als Silber und Zink, bezogen auf die Masse der metallischen funktionellen Schicht auf Silberbasis umfasst.

3. Verglasung nach einem der vorhergehenden Ansprüche, **dadurch gekennzeichnet, dass** das Laminat mindestens eine Antireflexbeschichtung umfasst, die eine dielektrische Schicht umfasst, die in der Lage ist, kuppelförmige Defekte zu erzeugen.

4. Verglasung nach Anspruch 3, **dadurch gekennzeichnet, dass** die dielektrischen Schichten, die in der Lage sind, kuppelförmige Defekte zu erzeugen, aus Schichten auf Zinn- und Zinkoxidbasis ausgewählt sind.

5. Verglasung nach einem der vorhergehenden Ansprüche, **dadurch gekennzeichnet, dass** das Laminat keine Antireflexbeschichtung umfasst, die eine dielektrische Schicht umfasst, die in der Lage ist, lochförmige Defekte zu erzeugen, die aus Schichten auf Titan-, Niob- und Zinnoxidbasis ausgewählt sind.

6. Verglasung nach einem der vorhergehenden Ansprüche, **dadurch gekennzeichnet, dass** die metallische funktionelle Schicht auf Silberbasis von jeder Titan umfassenden Schicht mindestens 10 nm, vorzugsweise mindestens 20 nm, getrennt ist.

7. Verglasung nach einem der vorhergehenden Ansprüche, **dadurch gekennzeichnet, dass** das Laminat mindestens eine Sperrschicht umfasst, die sich oberhalb der metallischen funktionellen Schicht auf Silberbasis befindet und unmittelbar mit dieser in Kontakt steht.

8. Verglasung nach Anspruch 7, **dadurch gekennzeichnet, dass** die Sperrschicht eine Schicht auf NiCr-, NiCrN-, NiCrOx-, NiO- oder NbN-Basis ist.

9. Verglasung nach einem der vorhergehenden Ansprüche, **dadurch gekennzeichnet, dass** die Antireflexbeschichtung, die eine dielektrische Schicht umfasst, die in der Lage ist, kuppelförmige Defekte zu erzeugen, und die sich unter einer metallischen funktionellen Schicht auf Silberbasis befindet.

10. Verglasung nach einem der vorhergehenden Ansprüche, **dadurch gekennzeichnet, dass** die Antireflexbeschichtung, die sich unter der metallischen funktionellen Schicht auf Silberbasis befindet, mindestens eine dielektrische Schicht mit einer stabilisierenden Funktion insbesondere auf Zinkoxidbasis, gegebenenfalls dotiert mit mindestens einem weiteren Element, beispielsweise Aluminium aufweist, die unmittelbar mit der Sperrschicht in Kontakt steht.

11. Verglasung nach einem beliebigen der vorhergehenden Ansprüche, **dadurch gekennzeichnet, dass** das Laminat umfasst:
- eine Antireflexbeschichtung, die sich unter der metallischen funktionellen Schicht auf Silberbasis befindet und mindestens eine dielektrische Schicht auf Zink- und Zinnoxidbasis und eine dielektrische Schicht mit stabilisierender Funktion auf Zinkoxidbasis umfasst,
- eine metallische funktionelle Schicht auf Basis von Zink umfassendem Silber die sich unmittelbar in Kontakt mit der dielektrischen Schicht mit stabilisierender Funktion auf Zinkoxidbasis befindet,
- gegebenenfalls eine Sperr-Deckschicht,
- eine Antireflexbeschichtung, die sich über der metallischen funktionellen Schicht auf Silberbasis befindet,
- gegebenenfalls eine obere Schutzschicht.

12. Verglasung nach einem der vorhergehenden Ansprüche, **dadurch gekennzeichnet, dass** die Dicke einer metallischen funktionellen Schicht zwischen 5 und 20 nm beträgt.

13. Verglasung nach einem der vorhergehenden Ansprüche, **dadurch gekennzeichnet, dass** die Antireflexbeschichtungen mindestens eine dielektrische Schicht mit einer Barrierefunktion auf Siliciumverbindungsbasis umfassen, die unter Oxiden wie SiO₂, Siliciumnitriden, Si₃N₄ und Oxynitriden SiOₓN_{y} ausgewählt sind, die gegebenenfalls mit mindestens einem weiteren Element, beispielsweise Aluminium, dotiert sind.

14. Verglasung nach einem der vorhergehenden Ansprüche, **dadurch gekennzeichnet, dass** das Substrat mit Laminatbeschichtung einer Wärmebehandlung bei einer Temperatur über 300 °C, vorzugsweise 500 °C unterzogen wurde.

15. Verglasung nach einem der vorhergehenden Ansprüche, **dadurch gekennzeichnet, dass** mindestens das Substrat mit Laminatbeschichtung aus gebogenem oder vorgespanntem Glas ist.

## Claims

1. A glazing comprising a transparent substrate coated with a stack of thin layers comprising at least one functional metal layer and at least two antireflective coatings, each antireflective coating comprising at least one dielectric layer, so that each functional metal layer is positioned between two antireflective coatings, **characterized in that** the stack comprises at least one silver-based functional metal layer comprising:
- at least 95.0%, preferably at least 96.5% and better still at least 98.0% by weight of silver, with respect to the weight of the functional layer, and
- from 0.5 to 3.5%, preferably from 1.0 to 2.0%, by weight of zinc, with respect to the weight of zinc and silver in the functional layer.

2. The glazing as claimed in claim 1, **characterized in that** the silver-based functional metal layer comprises less than 1.0% by weight of metals other than silver and zinc, with respect to the weight of the silver-based functional metal layer.

3. The glazing as claimed in either of the preceding claims, **characterized in that** the stack comprises at least one antireflective coating comprising a dielectric layer capable of generating defects of dome type.

4. The glazing as claimed in claim 3, **characterized in that** the dielectric layers capable of generating defects of dome type are chosen from layers based on zinc tin oxide.

5. The glazing as claimed in one of the preceding claims, **characterized in that** the stack does not comprise an antireflective coating comprising a dielectric layer capable of generating defects of hole type chosen from layers based on titanium oxide, on niobium oxide and on tin oxide.

6. The glazing as claimed in one of the preceding claims, **characterized in that** the silver-based functional metal layer is separated by at least 10 nm, preferably by at least 20 nm, from all titanium-comprising layers.

7. The glazing as claimed in one of the preceding claims, **characterized in that** the stack comprises at least one blocking layer located above and immediately in contact with the silver-based functional metal layer.

8. The glazing as claimed in claim 7, **characterized in that** the blocking layer is a layer based on NiCr, NiCrN, NiCrOₓ, NiO or NbN.

9. The glazing as claimed in any one of the preceding claims, **characterized in that** the antireflective coating comprising a dielectric layer capable of generating defects of dome type is located below a silver-based functional metal layer.

10. The glazing as claimed in any one of the preceding claims, **characterized in that** the antireflective coating located below the silver-based functional metal layer comprises at least one dielectric layer having a stabilizing function immediately in contact with the blocking layer, in particular based on zinc oxide, optionally doped using at least one other element, such as aluminum.

11. The glazing as claimed in any one of the preceding claims, **characterized in that** the stack comprises:
- an antireflective coating located below the silver-based functional metal layer comprising at least one dielectric layer based on zinc tin oxide and a dielectric layer having a stabilizing function based on zinc oxide,
- a functional metal layer based on silver comprising zinc located immediately in contact with the dielectric layer having a stabilizing function based on zinc oxide,
- optionally a blocking overlayer,
- an antireflective coating located above the silver-based functional metal layer,
- optionally an upper protective layer.

12. The glazing as claimed in one of the preceding claims, **characterized in that** the thickness of a functional metal layer is between 5 and 20 nm.

13. The glazing as claimed in any one of the preceding claims, **characterized in that** the antireflective coatings comprise at least one dielectric layer having a barrier function based on silicon compounds chosen from oxides, such as SiO₂, silicon nitrides Si₃N₄ and oxynitrides SiOₓN_{y}, optionally doped using at least one other element, such as aluminum.

14. The glazing as claimed in any one of the preceding claims, **characterized in that** the substrate coated with the stack has been subjected to a heat treatment at a temperature of greater than 300°C, preferably 500°C.

15. The glazing as claimed in any one of the preceding claims, **characterized in that** at least the substrate coated with the stack is made of bent or tempered glass.
